# EUROPÄISCHE PATENTSCHRIFT

(11) **EP 1 332 821 B1**
(45) Veröffentlichungstag und Bekanntmachung des Hinweises auf die Patenterteilung: **06.07.2005**
(21) Anmeldenummer: 02027160.7
(22) Anmeldetag: 05.12.2002
(51) Int. Cl.: B23D 33/02

(54) **Schere zum Abtrennen von Abschnitten von einem mittels einer Greifervorrichtung durchgezogenen Materialband, insbesondere einem Stahlcordband**
Shears for severing segments from a strip of material, in particular of steel cable, pulled through by a gripper device
Cisailles pour la coupe en tranches d'un ruban de materiel, en particulier d'un câble d'acier, tiré par un dispositif de grippage

(30) Priorität: 30.01.2002 DE 10203447
(43) Veröffentlichungstag der Anmeldung: 06.08.2003
(73) Patentinhaber: Karl Eugen Fischer GmbH Maschinenfabrik, D-96224 Burgkunstadt (DE)
(72) Erfinder: Hoffmann, Bernd, 96224 Burgkunstadt (DE)
(74) Vertreter: Blaumeier, Jörg

(56) Entgegenhaltungen:
- EP-A- 0 242 588
- DE-B- 1 260 131
- US-A- 3 387 841
- US-A- 3 813 974

## Beschreibung

Die Erfindung bezieht sich auf eine Schere zum Abtrennen von Abschnitten von einem mittels einer Greifervorrichtung durchgezogenen Materialband, insbesondere einem Stahlcordband, und zum Ablegen der Abschnitte auf einem unterhalb der, im Wesentlichen mit der Schneidkante des Untermessers zusammenfallenden, Materialbandebene angeordneten, aus mehreren parallelen Teilbändern bestehenden Abtransportband.

Eine solche Vorrichtung ist in US 3 813 974 offenbant.

Bei derartigen Scheren besteht die Gefahr, dass die Abschnitte beim Schnitt, wonach sie durch ihr Eigengewicht auf das Abtransportband herunterfallen, in einer verdrehten Position auftreffen, sodass sie beim anschließenden Weiterverarbeiten - meist soll ein Anspleißen aneinander erfolgen - nicht in der richtigen Position sind, oder durch aufwändige Maßnahmen erst wieder ausgerichtet werden müssen.

Der Erfindung liegt daher die Aufgabe zugrunde, eine Schere der eingangs genannten Art so auszugestalten, dass die abzutrennenden Abschnitte während des gesamten Abtrennvorgangs und während des Ablegens auf das Abtransportband lagefixiert gehaltert sind, sodass jegliches Verziehen und jegliche Schrägstellung verhindert ist.

Zur Lösung dieser Aufgabe ist erfindungsgemäß vorgesehen, dass unter dem Obermesser ein das darüber liegende Teilband des Abtransportbandes seitlich umgreifender, das Materialband beim Schneiden abstützender und mit dem Obermesser unter Einklemmung und Lagesicherung des nachlaufenden Endes des abgetrennten Band-Abschnittes nach unten verfahrbarer Gegenhalter angeordnet ist.

Durch einen derartigen Gegenhalter, dessen Oberkanten bevorzugt parallel zum unter einem Schnittwinkel gegenüber dem Untermesser geneigten Obermesser verlaufen sollen und der in Ausgestaltung der Erfindung aus einer Mehrzahl kürzerer, einzeln verschiebbar geführter Gegenhalterabschnitte bestehen kann, wird der abgetrennte Abschnitt schon während des Schneidvorgangs klemmend gehaltert, wobei diese Klemmhalterung auch noch beim anschließenden Nach-untenbewegen von Gegenhalter und Obermesser aufrechterhalten bleibt, sodass das nachlaufende Ende des abgetrennten Abschnitts absolut lagefixiert ist, bis kurz vor dem endgültigen Absenken auf das Abtransportband. Dadurch ist die eingangs genannte Gefahr eines Verziehens oder einer Fehlorientierung der Lage des abgetrennten Abschnitts auf dem Abtransportband vermieden, sodass ein etwa nachfolgender Spleißprozess mit exakt ausgerichteten Abschnitten ohne aufwändiges Nachjustieren der Lage der Abschnitte erfolgen kann.

In Weiterbildung der Erfindung ist dabei vorgesehen, dass im Auflagebereich des Gegenhalters ein das Materialband festhaltender Magnet oder eine Saugleiste angeordnet ist. Durch diesen in die Oberkante des Gegenhalters eingelassenen Magneten oder eine parallel dazu verlaufende Saugleiste, wird der hintere Rand des abzutrennenden Bandabschnitts immer festgehalten, insbesondere auch dann, wenn das Obermesser den unteren Totpunkt verlässt. Ohne das Festhalten durch einen Magneten oder eine Saugleiste bestunde die Gefahr, dass das Obermesser das Bandstreifenende mit anhebt.

Mit besonderem Vorteil kann dabei in weiterer Ausgestaltung der Erfindung vorgesehen sein, dass auch allen übrigen Teilbändern des Abtransportbandes dem Gegenhalter entsprechende Hochhalter zugeordnet sind, die zum Ablegen des Band-Abschnitts auf dem Abtransportband im Wesentlichen synchron mit dem Gegenhalter hydraulisch nach unten verfahrbar sind. Unter "hydraulisch" wird dabei im Folgenden immer verstanden, dass sowohl flüssige, als auch gasförmige Medien verwendet werden können.

Durch diese Maßnahme liegt der abzutrennende Bandabschnitt auf dem Gegenhalter und den Hochhaltern auf und wird abgestützt, noch dazu am einen Ende fixiert, nach unten auf das Abtransportband verfahren, sodass überhaupt keinerlei Gefahr einer Falschorientierung oder eines Verziehens mehr gegeben ist.

Gemäß einem weiteren Merkmal der vorliegenden Erfindung kann vorgesehen sein, dass jeder Gegenhalterabschnitt mittels zweier beabstandeter Führungsstangen verschiebbar geführt ist und dass ein zum Hochstellen des Gegenhalterabschnitts dienender erster, beidseitig wirkender Hydraulikzylinder beim Absenken des Obermessers auf geringeren Gegendruck nach oben umgesteuert wird, um kurz vor Erreichen des unteren Totpunktes des Obermessers auf Zug nach unten umgeschaltet zu werden, um den Gegenhalterabschnitt auf einen beweglichen Anschlag aufzusetzen, bei dessen Einfahren nach unten der Gegenhalterabschnitt durch den ersten Hydraulikzylinder bis in seine unterste, unterhalb des Abtransportbandes liegende, Endstellung verfahrbar ist.

Beim Absenken des Obermessers wird der in seiner oberen Stellung befindliche erste Hydraulikzylinder auf geringem Gegendruck nach oben geschaltet, sodass er zwar durch den Druck des Obermessers entgegen seiner Vorspannung nach unten bewegbar ist, andererseits aber durch den geringen Gegendruck von unten das Materialband gegen das Obermesser verklemmt. Erst ganz kurz vor dem Erreichen des unteren Totpunktes des Obermessers, selbstverständlich noch ein Stück oberhalb der Ebene des Abtransportbandes, wird der erste Hydraulikzylinder umgeschaltet, sodass er sich selbsttätig und nicht mehr nur durch den höheren Druck des Obermessers, das ja nunmehr angehalten und nach oben verfahren wird - nach unten bewegt, um den Gegenhalterabschnitt auf einem beweglichen Anschlag aufzusetzen. Durch die Auflage des Abschnitts auf dem Gegenhalterabschnitt und den Hochhaltern, kann bei dem, im Wesentlichen synchronen, Nach-unten-fahren keinerlei Verziehen oder keine Lageveränderung des Abschnittes stattfinden. Sobald der bewegliche Anschlag eingefahren ist, bewegen sich der Gegenhalter und entsprechend auch die Hochhalter in ihre unterste Position, ca. 30 mm weiter nach unten und legt den abgetrennten Bandabschnitt auf dem Abtransportband ab, welches üblicherweise mit Lagefixierungseinrichtungen versehen ist. Diese können entweder im oder unter dem Band angeordneten Magnete zum Anziehen eines Stahlcordbandes oder aber auch durch Lochungen der Abtransportbändern und darunter liegende Saugkästen gebildete Saugdüsen sein, die den Band-Abschnitt an die Teilbänder des Abtransportbandes ansaugen.

Schließlich liegt es auch noch im Rahmen der Erfindung, dass der bewegliche Anschlag an der vertikal verschiebbaren Kolbenstange eines zweiten Hydraulikzylinders angeordnet ist, der nach dem Aufsetzen des Gegenhalterabschnitts im Wesentlichen drucklos geschaltet wird.

Die Hochhalter, die prinzipiell ebenfalls wie die Gegenhalter ausgebildet und einzeln verfahrbar sein können, können in weiterer Ausgestaltung der Erfindung auch als hochkant gestellte Bleche ausgebildet sein, die an ihren Enden zu beiden Seiten des Materialbandes gemeinsam an Hydraulikzylindern befestigt sind, durch die sie gemeinsam gesteuert unterschiedlich absenkbar sind, derart, dass die Auflagekanten im Wesentlichen parallel zum Obermesser verlaufen. Mit dem Absenken des zum Untermesser ja geneigten Obermessers erfolgt nach dem Aufsetzen am einen Bandrand zunächst ein Absenken des entsprechenden Hydraulikzylinders und damit der Hochhalter an diesem Ende, sodass sich die Auflagekante im Endeffekt ebenso schräg stellt, wie die Kante des Obermessers. Nach Erreichen dieser Schrägstellung fahren dann beide Hydraulikzylinder unter Beibehaltung der Schrägstellung der Auflagekanten der Hochhalter mit dem Obermesser weiter nach unten.

Weitere Vorteile, Merkmale und Einzelheiten der Erfindung ergeben sich aus der nachfolgenden Beschreibung zweier Ausführungsbeispiele sowie anhand der Zeichnung. Dabei zeigen:
- Fig. 1: einen Schnitt durch eine erste Ausführungsform einer Schere mit einer erfindungsgemäßen Gegenhaltervorrichtung in der Ausgangsposition vor dem Durchziehen des Materialbande durch die Schere,
- Fig. 2: eine um 90° versetzte Teilansicht in Richtung des Pfeils II in Fig. 1 ohne Materialzange,
- Fig. 3: einen Schnitt entsprechend der Fig. 1 bei Beginn des Schneidvorgangs, also beim Aufsetzen des Obermessers auf das Materialband,
- Fig. 4: eine Stirnansicht des Gegenhalterabschnitts nach Fig. 3,
- Fig. 5: einen Schnitt durch die Schere im Bereich des unteren Totpunktes des Obermessers,
- Fig. 6: eine Stirnansicht des Gegenhalterabschnitts in der Betriebsstellung nach Fig. 5,
- Fig. 7: einen Schnitt durch die Schere nach dem Hochfahren des Obermessers und dem endgültigen Ablegen des abgetrennten Abschnitts auf dem Abtransportband,
- Fig. 8: eine Teilstirnansicht eines Gegenhalterabschitts in der Position nach Fig. 7,
- Fig. 9: einen der Figur 1 entsprechenden Schnitt durch eine zweite Ausführungsform einer erfindungsgemäßen Schere mit abgewandelten Hochhaltern,
- Fig. 10: eine um 90° versetzte Teilansicht in Richtung des Pfeils X in Fig. 9 ohne Materialzange,
- Fig. 11: einen Schnitt durch die Schere im Bereich des unteren Totpunktes des Obermessers (entsprechend Fig. 5 des anderen Ausführungsbeispiels),
- Fig. 12: eine Stirnansicht entsprechend Figur 10 in der Betriebsstellung nach Figur 9,
- Fig. 13: eine schematische Draufsicht auf die Gegenhalter und Hochhalter und
- Fig. 14: eine schematische Seitenansicht der geteilten Gegenhalter und durchgehenden Hochhalter in unterschiedlichen Absenkstellungen des Obermessers.

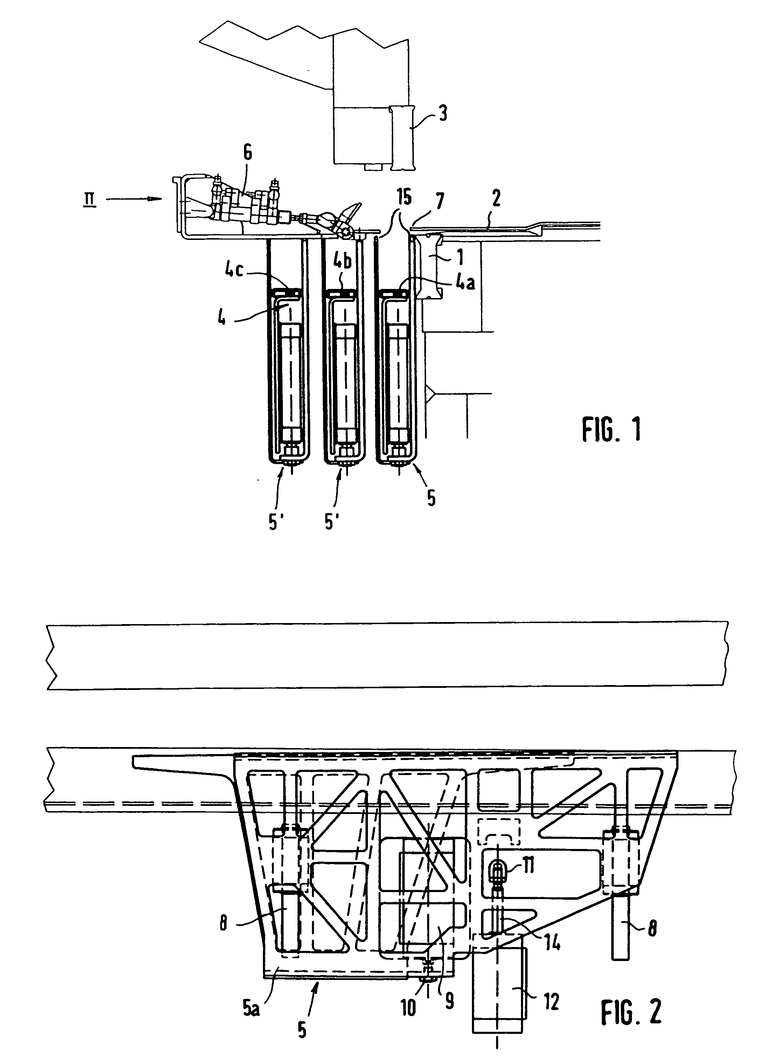

In der Fig. 1 erkennt man bei 1 das stationäre, im Wesentlichen in der Antransportebene des zu schneidenden Materialbandes 2 liegende Untermesser und bei 3 das Obermesser einer Schere, insbesondere zum Schneiden von Cordband für die Reifenindustrie, und bei 4 das aus einer Mehrzahl von parallelen Teilbändern 4a, 4b und 4c bestehende Abtransportband zum Abtransportieren eines abgetrennten Band-Abschnittes im Wesentlichen senkrecht zur Zuführrichtung des Materialbandes 2. Dem unterhalb des Obermessers 3 angeordneten Teilband 4a ist ein Gegenhalter 5 zugeordnet, der das Materialband beim Schneiden abstützt und mit dem Obermesser unter Einklemmung und Lagesicherung nach unten transportiert. Entsprechende Abstützeinrichtungen wie der Gegenhalter 5, die als Hochhalter 5' dienen, umgreifen die ubngen Teilbänder 4b und 4c des Abtransportbandes 4. Diese Hochhalter 5' bewegen sich hydraulisch und im Wesentlichen synchron mit dem Gegenhalter 5 nach unten. Ihre Steuerbewegung braucht daher im Folgenden nicht im Einzelnen beschrieben zu werden.

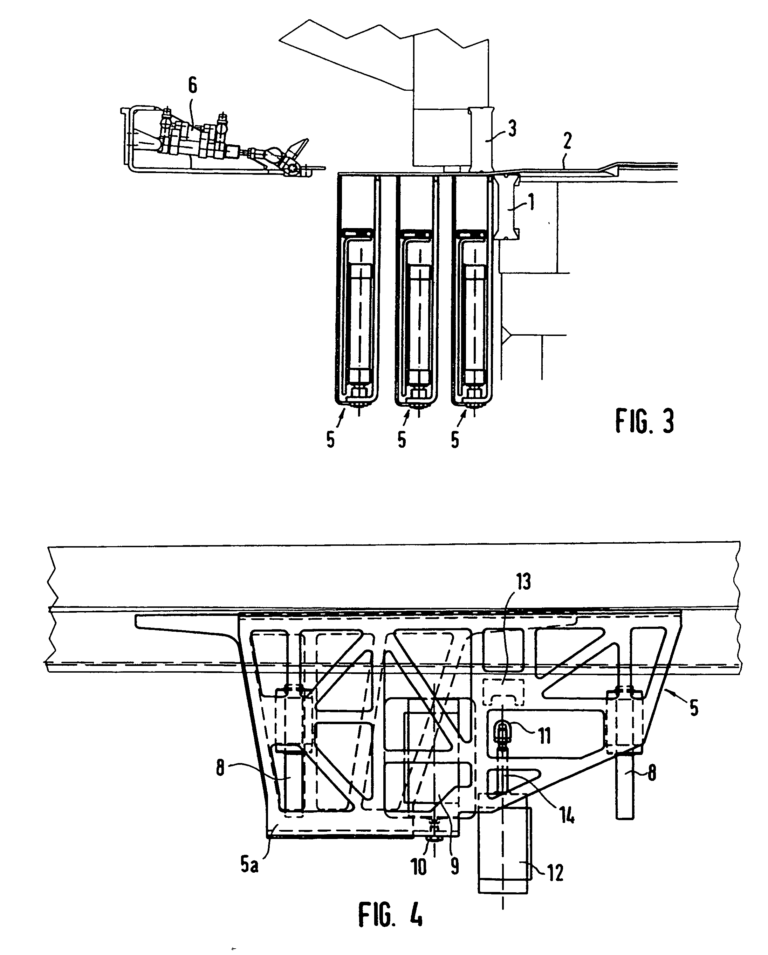

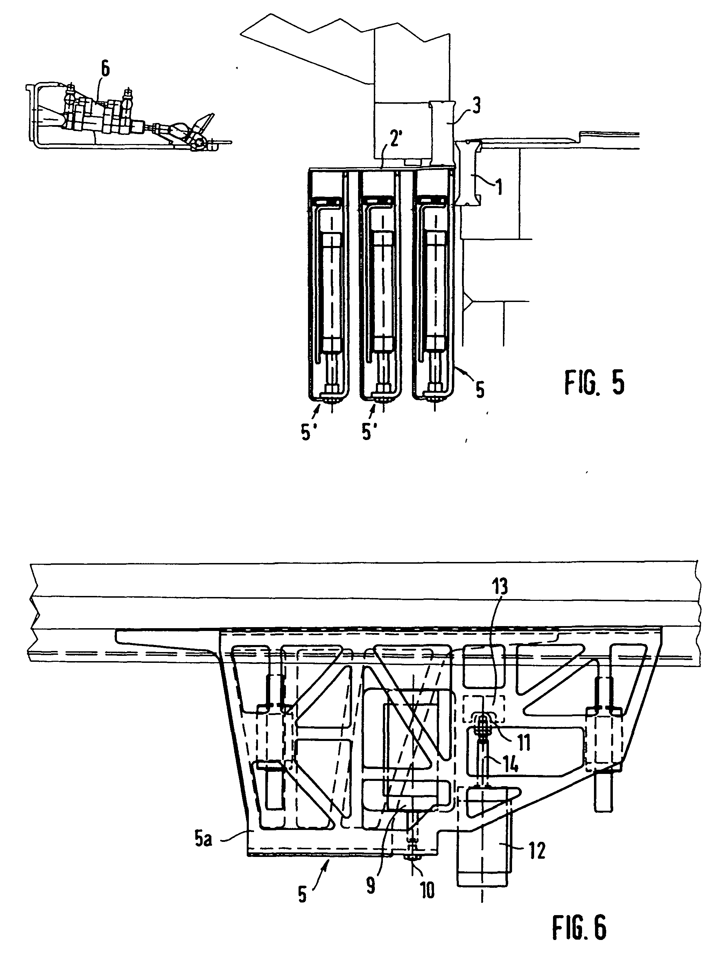

Ausgehend von der Position nach Fig. 1, in der eine Materialzange 6 das vorlaufende Ende 7 des Materialbandes 2 ergreift, wird das Materialband 2 durch die Schere gezogen und auf dem Gegenhalter 5 und den Hochhaltern 5' abgelegt. Nach Öffnen und dem Zurückziehen in Freigabestellung der Materialzange wird das Obermesser 3 nach unten verfahren (Fig. 3), wobei das Materialband 2 zwischen ihm und den Oberkanten des im Wesentlichen U-förmigen Gegenhalters 5 verklemmt wird. Beim weiteren Nach-unten-bewegen des Obermessers 3 und dem Abschneiden eines Materialbandabschnittes 2', wie dies in Fig. 5 gezeigt ist, bewegt sich der abgetrennte Bandabschnitt 2' eingeklemmt zwischen Obermesser 3 und Gegenhalter 5 sowie abgestützt auf den sich ebenfalls mit nach unten bewegenden Hochhaltern 5' im Wesentlichen in einer horizontalen Ebene ausgenchtet nach unten, bis in eine Zwischenstellung, in der der Gegenhalter durch einen beweglichen Anschlag begrenzt wird.

In der Praxis ist der Gegenhalter 5 bevorzugt durch eine Vielzahl von kürzeren einzeln verschiebbare geführten Gegenhalterabschnitten gebildet, von denen in den Fig. 2, 4, 6 und 8 nur ein Gegenhalterabschnitt 5a dargestellt ist. An diesen schließen sich links und rechts natürlich weitere solcher Gegenhalterabschnitte an. Jeder Gegenhalterabschnitt ist an zwei Führungsstangen 8 geführt, wobei für die vertikale Verschiebebewegung ein erster, doppelt wirkender Hydraulikzylinder 9 vorgesehen ist, dessen Kolbenstange bei 10 mit dem Gegenhalterabschnitt 5a verbunden ist, sowie ein einen beweglichen Anschlag 11 tragender zweiter Hydraulikzylinder 12, der lediglich einseitig wirkend ausgebildet zu sein braucht.

Beim Schneiden des Cordbandes 2, das heißt, bei der Bewegung des Obermessers 3, ausgehend von der Position nach Fig. 3, nach unten, ist der Hydraulikzylinder 9 mit geringem Druck nach oben vorgespannt, sodass er den Gegenhalterabschnitt 5a mit einer geringen Druckkraft nach oben verspannt. Diese Druckkraft kann vom Obermesser 3 leicht überwunden werden, sodass beim Nach-unten-bewegen des Obermessers 3 in die Stellung nach Fig. 5 auch der Gegenhalterabschnitt 5a mit dem zwischen ihm und den Obermesser 3 eingeklemmten, abgetrennten Band-Abschnitt 2' gegen die Wirkung des Hydraulikzylinders 10 nach unten gedrückt wird. Kurz vor Erreichen des unteren Totpunktes der Bewegung des Obermessers 3 setzt ein Klotz 13 des Gegenhalterabschnitts 5a, der in den Fig. gestrichelt angedeutet ist, auf dem beweglichen Anschlag 11, beispielsweise einem Kunststoffteil, am freien Ende der Kolbenstange 14 des zweiten Hydraulikzylinders 12 auf, nachdem kurz vorher der Hydraulikzylinder 9 umgeschaltet worden ist, sodass er sich ohne den Druck des Obermessers 3 selbsttätig nach unten bewegt und damit den Gegenhalterabschnitt 5a mitnimmt.

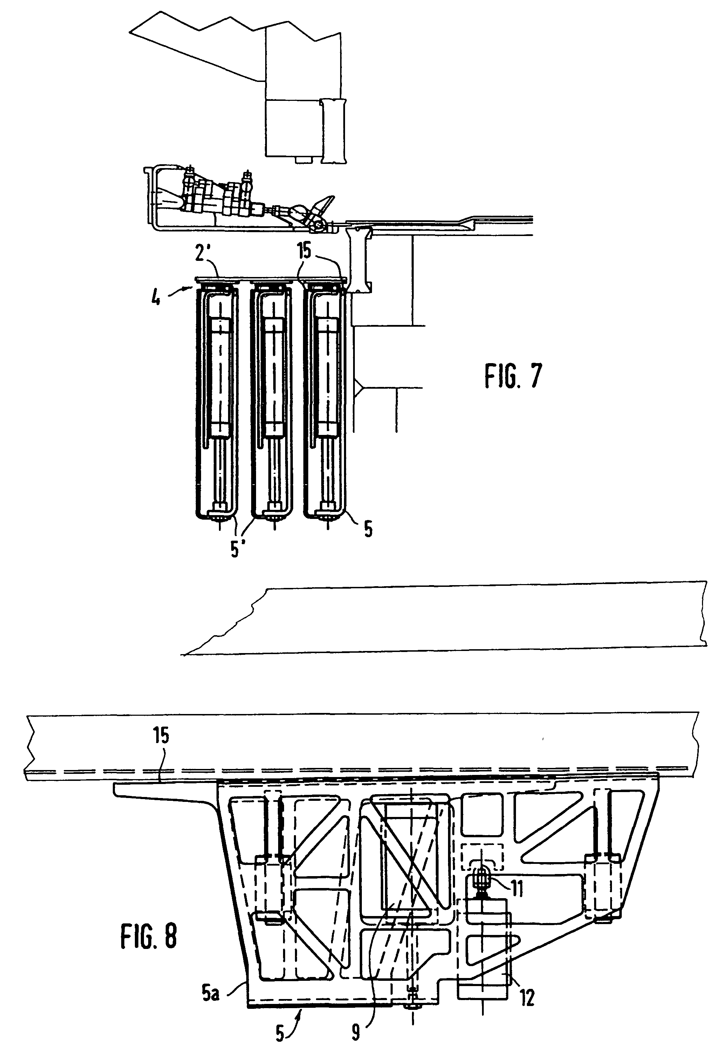

Nach dem Einfahren des beweglichen Anschlags 11, was bevorzugt durch Drucklosschalten des Hydraulikzylinders 12 erfolgen kann, fahrt der entsprechend nach wie vor nach unten vorgespannte Hydraulikzylinder 9 den Gegenhalterabschnitt mit dem daraufliegenden nachlaufenden Ende des abgetrennten Band-Abschnitts 2' soweit nach unten, dass die Auflagekanten 15 des U-förmigen Gegenhalters 5 unterhalb der Ebene des Abtransportbandes 4 liegen (vgl. insbesondere Fig. 7), sodass dann der abgetrennte Band-Abschnitt 2' auf den Teilbändern 4a, 4b, 4c des Abtransportbandes 4 aufliegt.

Nach dem Abtransport des Abschnitts 2' mithilfe des Abtransportbandes 4 fahren der Gegenhalter 5 und die Hochhalter 5' aus der Stellung nach Fig. 7 und 8 wieder nach oben in die Stellung nach Fig. 1, in der dann erneut das Band 2 ein entsprechendes Stück durch die Schere durchgezogen wird und der vorstehend beschriebene Taktablauf erneut beginnt.

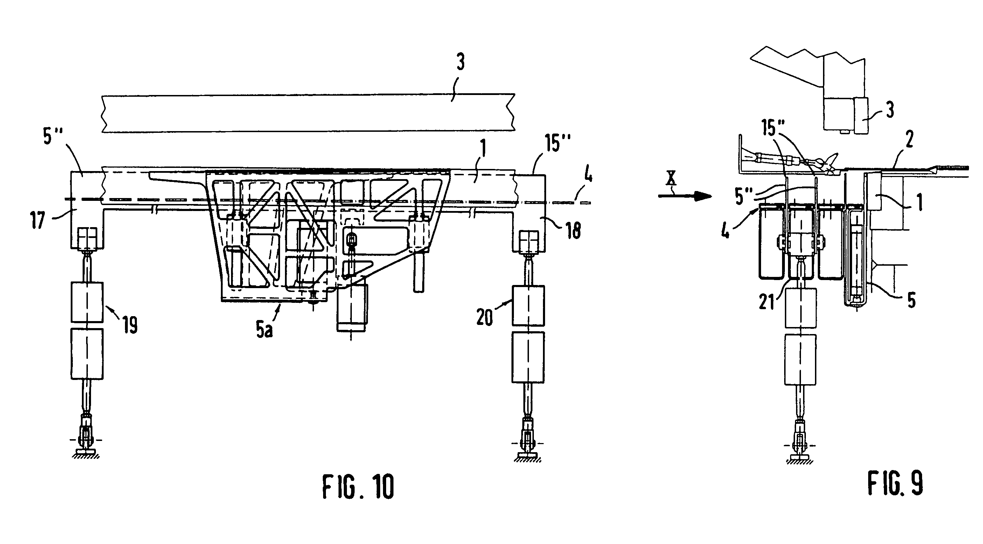

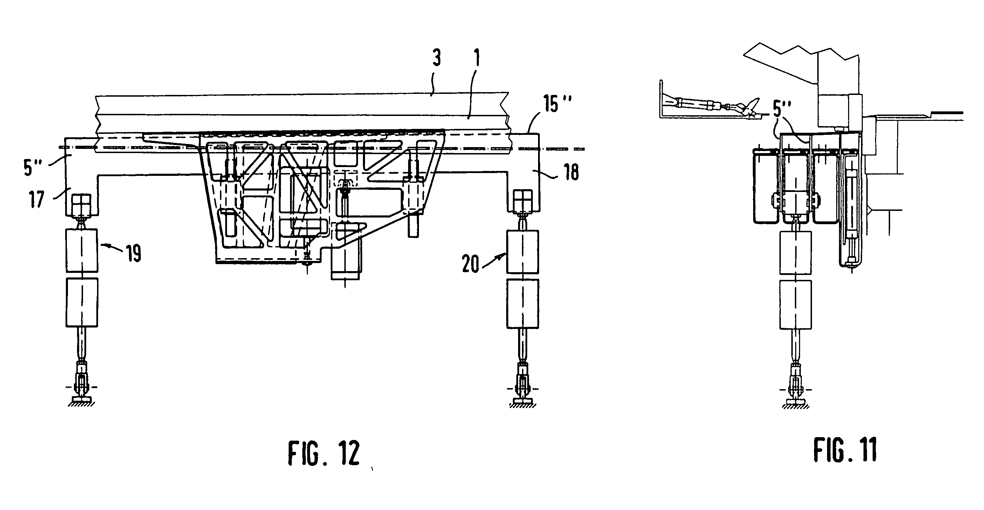

Das in den Figuren 9 bis 12 dargestellte abgewandelte Ausführungsbeispiel unterscheidet sich von dem nach den Figuren 1 bis 8 im Wesentlichen durch die andere Ausbildung der Hochhalter 5". Diese sind nicht analog als U-förmige Bauteile wie die Gegenhalter 1 ausgebildet, sondern die Hochhalter 5" sind nur hochkant gestellte Bleche, die an ihren Enden 17, 18, beidseits des Materialbandes 2, 2' durch Bügel 21 miteinander verbunden sind, an denen Hydraulikzylinder 19 bzw. 20 angreifen. Die Hochhalter 5" sind natürlich insgesamt genauso lang, wie die aus mehreren Teilen bestehenden Gegenhalter 5 gemeinsam. Nur der Übersichtlichkeit halber ist in den Figuren 10 und 12 jeweils das in Wahrheit wesentlich weiter außen liegende Ende 17, 18 neben einem der Gegenhalterabschnitte 5a dargestellt.

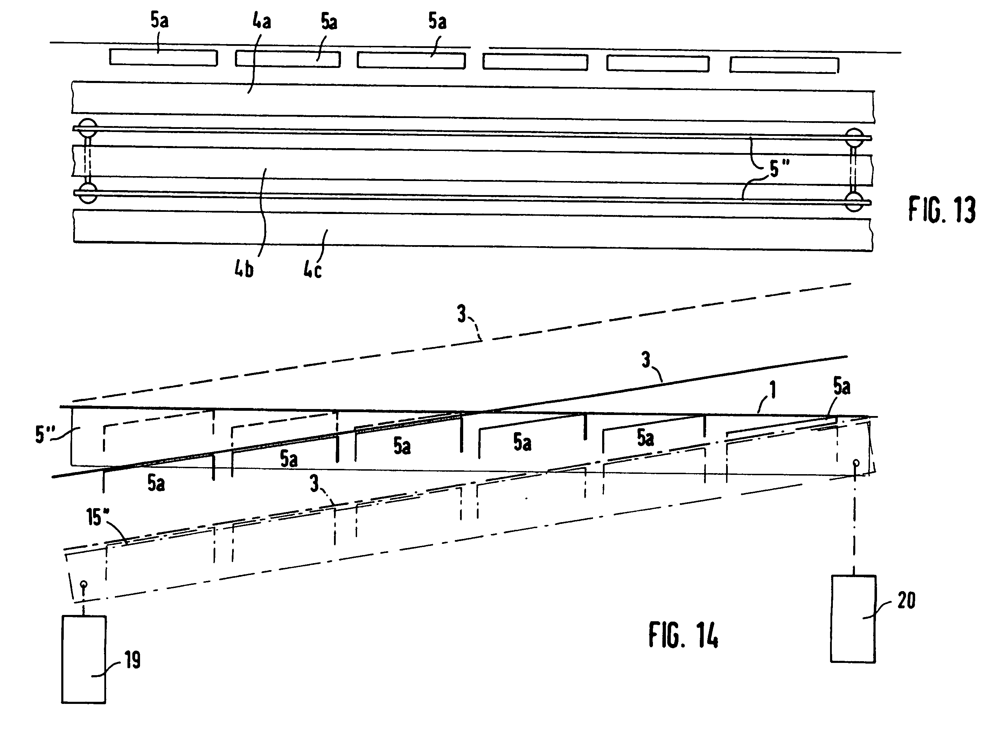

In den Figuren 13 und 14 ist anhand einer schematischen Draufsicht bzw. Seitenansicht nochmals dargestellt, wie beim Absenken des Obermessers zum einen die Gegenhalterabschnitte 5a nacheinander vom Obermesser erfasst und mit nach unten gedrückt werden und wie insbesondere auch die Hochhalter mit Hilfe ihrer unterschiedlich angesteuerten und verschiedene Stellkurven aufweisenden Hydraulikzylinder 19, 20 entsprechend der Kante des Obermessers beim Schneiden des Cordbandes schräggestellt werden, sodass eine möglichst gute Auflage des Bandes erzielt wird. In Figur 14 ist zu diesem Zweck die Kante des Obermessers 3 einmal gestrichelt in der Ausgangsstellung, einmal ausgezogen in der teilweise abgesenkten Stellung, in der das Cordband nur teilweise durchtrennt ist, und einmal strichpunktiert in der unteren Totpunktstellung gezeichnet. Die Position der Gegenhalterabschnitte 5a ist dabei jeweils in gleicher Weise gestrichelt durchgezogen oder strichpunktiert mit eingezeichnet. Gleichzeitig ist auch die Position eines Hochhalters 5" einmal in der zum Untermesser 1 parallelen Ausgangsstellung und einmal in der unteren Totpunktstellung des Obermessers dargestellt, in der man erkennt, dass die Hochhalter links und rechts in unterschiedlicher Weise abgesenkt worden sind, sodass sie letztendlich mit ihrer Oberkante 15" parallel zur Kante des Obermessers 3 verlaufen.

## Patentansprüche

1. Schere zum Abtrennen von Abschnitten von einem mittels einer Materialzange (6) einer Greifervorrichtung durchgezogenen Materialband (2), insbesondere einem Stahlcordband, mit einem stationären Untermesser (1) und einem relativ dazu beweglichen Obermesser (3) und einem aus einer Mehrzahl von parallelen Teilbändern (4a, 4b, 4c) bestehendem Abtransportband (4), **dadurch gekennzeichnet, dass** unter dem Obermesser (3) ein das darüber liegende Teilband (4a) des Abtransportbandes (4) seitlich umgreifender, das Materialband (2) beim Schneiden abstützender und mit dem Obermesser (3) unter Einklemmung und Lagesicherung des nachlaufenden Endes des abgetrennten Band-Abschnittes (2') nach unten verfahrbarer Gegenhalter (5) angeordnet ist.

2. Schere nach Anspruch 1, **dadurch gekennzeichnet, dass** der Gegenhalter (5) aus einer Mehrzahl kürzerer, einzeln verschiebbar geführter, Gegenhalterabschnitte (5a) besteht.

3. Schere nach Anspruch 2, **dadurch gekennzeichnet, dass** die Oberkanten (15) der Stege der vorzugsweise U-förmigen Gegenhalterabschnitte (5a) parallel zum unter einem Schnittwinkel gegenüber dem Untermesser (1) geneigten Obermesser (3) verlaufen.

4. Schere nach einem der Ansprüche 1 bis 3, **dadurch gekennzeichnet, dass** im Auflagebereich des Gegenhalters (5) ein das Materialband (2, 2') festhaltender Magnet (16) oder eine Saugleiste angeordnet ist.

5. Schere nach einem der Ansprüche 1 bis 4, **dadurch gekennzeichnet, dass** den übrigen Teilbändern (4b, 4c) des Abtransportbandes (4) dem Gegenhalter (5) entsprechende Hochhalter (5') zugeordnet sind, die zum Ablegen des Materialabschnitts (2') auf dem Abtransportband (4) im Wesentlichen synchron mit dem Gegenhalter (5) hydraulisch nach unten verfahrbar sind.

6. Schere nach einem der Ansprüche 1 bis 5, **dadurch gekennzeichnet, dass** jeder Gegenhalterabschnitt (5a) mittels zweier beabstandeter Führungsstangen (8) verschiebbar geführt ist und dass ein zum Hochstellen des Gegenhalterabschnitts (5a) dienender erster beidseitig wirkender Hydraulikzylinder (9) beim Absenken des Obermessers (3) auf geringen Gegendruck nach oben umgesteuert wird, um kurz vor Erreichen des unteren Totpunktes des Obermessers (3) auf Zug nach unten umgeschaltet zu werden, um den Gegenhalterabschnitt (5a) auf einen beweglichen Anschlag (11) aufzusetzen, bei dessen Einfahren nach unten der Gegenhalterabschnitt (5a) durch den ersten Hydraulikzylinder (9) bis in seine unterste, unterhalb des Abtransportbandes (4) liegende, Endstellung verfahrbar ist.

7. Schere nach Anspruch 6, **dadurch gekennzeichnet, dass** der bewegliche Anschlag (11) an der vertikal verschiebbaren Kolbenstange (14) eines zweiten Hydraulikzylinders (12) angeordnet ist, der nach dem Aufsetzen des Gegenhalterabschnitts (5a) im Wesentlichen drucklos geschaltet wird.

8. Schere nach einem der Ansprüche 1 bis 7, **dadurch gekennzeichnet, dass** das Abtransportband (4) mit Magneten oder Saugöffnungen zur Lagefixierung des abgelegten Band-Abschnitts versehen ist.

9. Schere nach einem der Ansprüche 4 bis 8, **dadurch gekennzeichnet, dass** die vorzugsweise als hochkant gestellte Bleche ausgebildeten Hochhalter (5") an ihren Enden (17, 18) zu beiden Seiten des Materialbandes (2) gemeinsam an Hydraulikzylindern (19, 20) befestigt sind, die gesteuert unterschiedlich absenkbar sind, derart, dass die Auflagekanten im Wesentlichen parallel zum Obermesser verlaufen.

## Claims

1. Shears for cutting off lengths of a material strip (2) pulled through a gripping device by means of a material pincer (6), in particular a steel corded strip, having a stationary lower blade (1) and an upper blade (3) movable relative thereto, and having an afferent conveyor belt (4) consisting of a plurality of parallel subsidiary belts (4a, 4b, 4c), **characterised in that** below the upper blade (3), a abutment (5) is disposed which laterally engages around the subsidiary belt (4a) (of the conveyor belt (4)) lying above the same, supports the material strip (2) during cutting, and is movable downwards with the upper blade (3) whilst gripping and holding in place the trailing end of the separated length of strip (2').

2. Shears according to claim 1, **characterised in that** the abutment (5) consists of a plurality of relatively short, individually displaceably guided abutment sections (5a).

3. Shears according to claim 2, **characterised in that** the upper edges (15) of the webs of the abutment sections (5a), which are preferably U-shaped, extend parallel to the upper blade (3) inclined at a cutting angle relative to the lower blade (1).

4. Shears according to one of claims 1 to 3, **characterised in that** a magnet (16) or suction strip which holds the material strip (2, 2') still is disposed in the contact region of the abutment (5).

5. Shears according to one of claims 1 to 4, **characterised in that** holding-up elements (5') corresponding to the remaining subsidiary belts (4b, 4c) of the afferent conveyor belt (4) are allocated to the abutment (5) and are movable downwards by hydraulic means for depositing of the length of material (2') on the conveyor belt (4) substantially synchronously with the abutment (5).

6. Shears according to one of claims 1 to 5, **characterised in that** each abutment section (5a) is displaceably guided by means of two spaced guide rods (8) and that a first hydraulic cylinder (9) acting on both sides and serving to raise the abutment section (5a) is reversed upwards with slight counter-pressure as the upper blade (3) is lowered in order to be switched back to a downward stroke upon reaching the lower dead centre of the upper blade (3), in order to place the abutment section (5a) on a moving stop (11), upon whose retraction in a downward direction the abutment section (5a) is movable by the first hydraulic cylinder (9) into its bottom-most end position lying below the afferent conveyor belt (4).

7. Shears according to claim 6, **characterised in that** the moving stop (11) is disposed on the vertically displaceable piston rod (14) of a second hydraulic cylinder (12), which after placing of the abutment section (5a) is switched in a substantially pressureless manner.

8. Shears according to one of claims 1 to 7, **characterised in that** the afferent conveyor belt (4) is provided with magnets or suction apertures for fixing in position the deposited length of strip.

9. Shears according to one of claims 4 to 8, **characterised in that** the holding-up devices (5") formed preferably as plates placed on end are fixed in common at their ends (17, 18) at both sides of the material strip (2) to hydraulic cylinders (19, 20), which may be lowered separately in a controlled manner, in such a way that the contact edges extend substantially parallel to the upper blade.

## Revendications

1. Cisaille pour sectionner des tronçons d'un matériau en bande (2), tiré au moyen de la pince d'un dispositif de grippage, en particulier d'un câble d'acier, du type comportant une lame inférieure fixe (1) et une lame supérieure (3), se déplaçant par rapport à la précédente, et une bande de transport se composant d'une pluralité de bandes partielles parallèles (4a, 4b, 4c), **caractérisée en ce que**, au-dessous de la lame supérieure (3) est disposé un ensemble de contre-maintien (5), s'accrochant par enroulement latéral à la bande partielle située au-dessus (4a) de la bande de transport (4), en créant un appui pour le matériau en bande, au moment de la coupe, et pouvant cheminer vers le bas avec la lame supérieure (3), par pincement et mise en place de l'extrémité menée du tronçon de bande (2')

2. Cisaille selon la revendication 1, **caractérisée en ce que** le contre-maintien (5) se compose d'une pluralité de sections de contre-maintien (5a), plus courtes et pouvant se déplacer en étant guidées individuellement.

3. Cisaille selon la revendication 2, **caractérisée en ce que** les arêtes supérieures (15) suivent le trajet des sections de contre-maintien (5a), de préférence en forme de U, parallèlement à la lame supérieure, inclinée suivant un angle de coupe par rapport à la lame inférieure.

4. Cisaille selon l'une quelconque des revendications 1 à 3, **caractérisée en ce que**, dans la zone d'appui du contre-maintien (5), est disposé un aimant ou une rainure d'aspiration (16'), retenant le matériau en bande (2, 2').

5. Cisaille selon l'une quelconque des revendications 1 à 5, **caractérisée en ce que**, face aux autres bandes partielles (4b,4c) de la bande de transport (4), sont disposées des pièces de maintien surélevées (5'), correspondant au contre-maintien (5), qui sont déplaçables hydrauliquement vers le bas, de manière pratiquement synchrone avec le contre-maintien (5), en vue du dépôt du tronçon de matériau (2') sur la bande de transport (4).

6. Cisaille selon l'une quelconque des revendications 1 à 5, **caractérisée en ce que** chaque section de contre-maintien (5a) est guidée en déplacement au moyen de deux colonnettes de guidage (8), et **en ce qu'**un premier cylindre hydraulique (9), agissant par ses deux côtés, servant au réglage en hauteur de la section de contre-maintien (5a), est commandé vers le haut avec une faible contre-pression lors de la descente de la lame supérieure (3), pour être inversé vers le bas peu avant que, sur son trajet, la lame supérieure (3) atteigne son point mort inférieur, pour amener la section de contre-maintien (5a) sur une butée mobile (11), lors de l'enfoncement vers le bas de la section de contre-maintien (5a), provoquée par le premier cylindre hydraulique (9) jusqu'à sa position finale, située au-dessous de la bande de transport (4).

7. Cisaille selon la revendication 6, **caractérisée en ce que** la butée mobile (11) est située sur la tige de piston déplaçable verticalement d'un second cylindre hydraulique (12), qui, après amenée de la section de contre-maintien (5a), est pratiquement sans pression.

8. Cisaille selon l'une quelconque des revendications 1 à 7, **caractérisée en ce que** la bande de transport (4) comporte des aimants ou des ouvertures d'aspiration, en vue de la retenue en place de la section de bande déposée.

9. Cisaille selon l'une quelconque des revendications 4 à 8, **caractérisée en ce que** la pièce de maintien surélevée, réalisée, de préférence sous forme d'un tôle placée de champ (5"), est fixée à ses extrémités aux deux côtés du matériau en bande (2), en même temps qu' à des cylindres hydrauliques qui peuvent être abaissés indépendamment (19, 20), de telle manière que les arêtes de contact s'étendent pratiquement parallèlement à la lame supérieure.
